Europäisches Patentamt

European Patent Office

Office européen des brevets

(11) Publication number : **0 471 459 A1**

(12) **EUROPEAN PATENT APPLICATION**

(21) Application number : **91306736.9**

(22) Date of filing : **24.07.91**

(51) Int. Cl.⁵ : **B29C 33/52,** B29C 37/00,
// B29K105:06

(30) Priority : **28.07.90 GB 9016636**

(43) Date of publication of application :
**19.02.92 Bulletin 92/08**

(84) Designated Contracting States :
**DE ES FR GB IT**

(71) Applicant : **WESTLAND AEROSTRUCTURES
LIMITED
Westland Group plc
Yeovil BA20 2YB (GB)**

(72) Inventor : **Jones, Edward John
45 Wilton Park Road
Shanklin, Isle of Wight (GB)**

Inventor : **Sandercock, Stephen Raymond
87 Lushington Hill
Wootton, Isle of Wight (GB)**
Inventor : **Spall, Michael Keith
10 Kings Road
Binstead, Isle of Wight (GB)**
Inventor : **Whillier, Mark
97 Mill Hill Road
Cowes, Isle of Wight (GB)**
Inventor : **Woolford, Paul
87 Sylvan Avenue
East Cowes, Isle of Wight (GB)**

(74) Representative : **Boutland, John Anthony et al
Barker, Brettell & Boutland Prudential
Buildings 97-101 Above Bar Street
Southampton SO9 4GT (GB)**

(54) **Method for making perforated structures from composite material.**

(57)   A method for making perforated structures (14) from composite material uses a mould tool (11) made from a degradable material and having pin portions (13) removable from the structure (14) by degradation of the degradable material. A method for making a mould tool from a particular degradable material is also disclosed.

Fig.1.

This invention relates to a method for making perforated structures from composite materials particularly but not exclusively for use in acoustic attenuating liners.

Perforated composite laminate structures are used to form one surface of acoustic attenuating liners which are used typically in the aircraft industry such as in engine nacelle construction. It has been proposed, for example in US-A-4486372, to manufacture contoured perforated composite laminates in a two stage process utilising a mould tool having a flat surface portion including a plurality of spaced-apart rigid pins integral therewith and projecting substantially perpendicular from the mould tool surface. A plurality of fibre-reinforced composite sheets are forced against the mould tool surface causing the pins to project through the sheets.

The prior specification envisages partial cure only of the composite laminate on the mould tool in order to facilitate its subsequent forming and curing on a contoured fixture. One problem with such a method is difficulty in removing the composite laminate from the pins on the mould tool, and the two stage process in which the perforated laminate is formed into a contour without support in the holes complicates manufacture and may result in undesirable degradation of the structure of the holes.

Consequently, one objective of this invention is to provide a method for forming a perforated composite structure using a multi-pin mould tool which overcomes the aforementioned difficulty. A further objective is to provide a method for manufacturing a multi-pin mould tool to achieve the main objective and yet a further objective is to provide a single stage method for forming a contoured perforated composite structure.

Accordingly, in one aspect this invention provides a method for making a perforated structure from composite material comprising the steps of:

providing a mould tool made from degradable material and comprising a base portion and a plurality of integral spaced-apart pin portions projecting substantially perpendicular therefrom,

locating a desired thickness of composite material on the mould tool so that the pin portions project through the material,

curing the composite material to form the structure,

separating the structure from the mould tool whereby at least some of the pin portions may break from the base portion to be retained in the structure, and

degrading the degradable material to remove the retained pin portions from the structure thereby forming the perforations through the structure.

Conveniently, a release agent may be applied to the mould tool surface prior to locating the composite material on the mould tool, and pressure may be applied to the composite material to force the pin portions to project therethrough. Conveniently the pressure may be applied using a vacuum bag process.

Pressure may be applied to the composite material to consolidate the material during curing and may be applied using a silicon rubber pressure intensifier.

The composite material may comprise sheets of fibre-reinforced material impregnated with a thermo-setting resin and curing of the structure may be accomplished by the application of heat and pressure to the assembled sheets. Alternatively, the composite material may comprise sheets of fibre-reinforced material impregnated with a thermo-plastic resin and individual sheets may be heated to soften the resin prior to location on the mould tool to facilitate projection of the pin portions therethrough. In such an embodiment curing may be accomplished by the application of pressure as the structure cools.

The pin portions may be circular in cross section with a plain shank length extending from the base portion and a pointed outer end.

The degradable material may comprise a water soluble eutectic salt compound and the step of degrading the material may be accomplished by washing out retained pin portions with water.

The mould tool may be provided by producing a metal pattern having pins corresponding to the desired shape and size of the pins of the finished mould tool,

producing a moulding from the pattern so as to have a plurality of indentations in one surface corresponding to the pins of the metal pattern,

locating the moulding in a container with its indented surface uppermost,

disposing a quantity of a eutectic salt compound on the indented surface,

closing the container and applying a vacuum,

heating the container to a temperature sufficient to melt the eutectic salt compound whilst maintaining the vacuum,

releasing the vacuum in the container so that atmospheric pressure causes the melted compound to enter the indentations in the moulding,

cooling the assembly to a temperature sufficient to solidify the eutectic salt compound, and

separating the eutectic salt compound mould tool from the moulding.

Separation may occur at an elevated temperature below the temperature at which the eutectic salt compound solidifies and before full contraction of the moulding occurs so as to prevent said contraction causing breakage of any of the pins.

Preferably said moulding is a rubber moulding incorporating at least one layer of fibreglass material to increase its thermal stability so as to permit separation of the mould tool from the rubber moulding at room temperature.

The invention will now be described by way of example only and with reference to the accompanying drawings in which,

Figures 1 to 3 inclusive illustrate the steps in a method for producing a perforated composite structure,

Figures 4 to 9 inclusive illustrate the steps in a method for producing a mould tool for use in the method of Figures 1 to 3 inclusive, and

Figure 10 is a fragmentary view on an enlarged scale of part of the mould tool of Figures 4 to 8 inclusive.

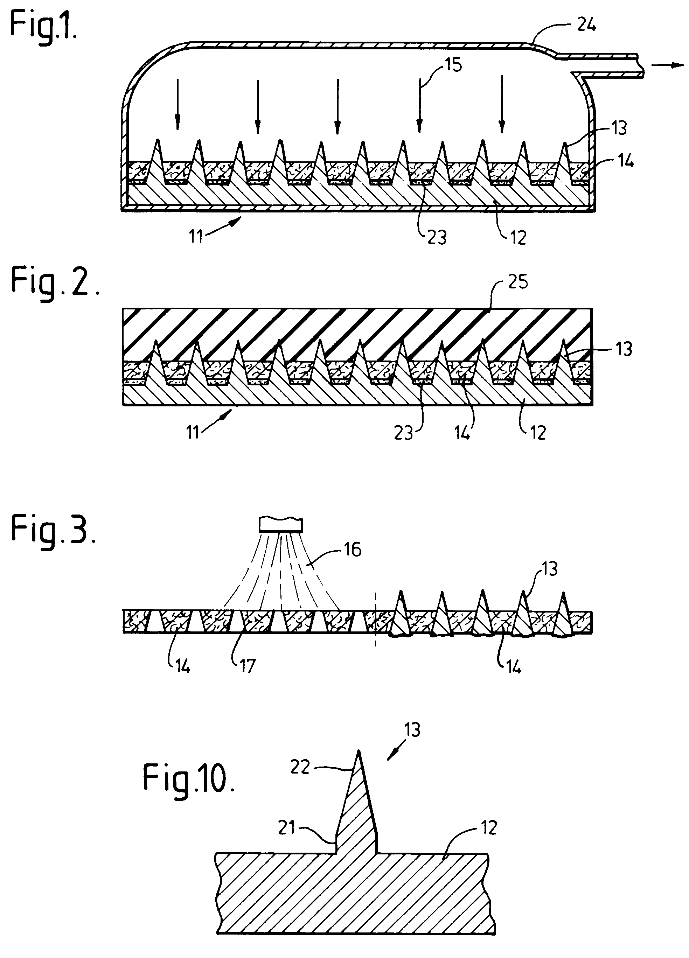

Referring now to Figure 1, a mould tool 11 comprises a base portion 12 and a plurality of integral spaced-apart pin portions 13 projecting substantially perpendicularly therefrom. The mould tool 11 is manufactured from a degradable material comprising a hot melt water soluble casting compound such as a eutectic salt compound, and one suitable material, known as System V compound, is supplied by Templeman Industries (UK) Ltd.

A preferred configuration for the pin portions 13 is shown in Figure 10. Thus the pin portions 13 are circular in cross section having a plain shank portion 21 extending from the base 12 and a pointed outer end portion 22. In one embodiment the pin portions 13 have a 2mm base diameter, a height of 5mm and a plain shank length of 1mm extending from the base.

The surface of the mould tool 11 is treated with a mould release film and several layers of breather material shown collectively at 23 in Figures 1 and 2. A desired number of sheets of fibre-reinforced composite material pre-impregnated with a thermo-setting resin are laid in turn on the mould tool 11 to form a laminate structure 14 of desired thickness, and a vacuum is applied to each individual sheet such as by evacuation of a vacuum bag 24 to apply pressure as indicated by arrows 15 to force the pin portions 13 through the structure 14 and consolidate the lay up. The breather material in layer 23 assists consolidation and the pointed configuration of the pin portions 13 ensures that reinforcing fibres of the individual sheets of composite material are separated but not broken during consolidation on the mould tool 11.

A silicon rubber pressure intensifier 25 (Figure 2) is located on the structure 14 and the assembly is consolidated and cured by the application of heat and pressure in the normal way. Conveniently, pressure can be applied by locating the assembled mould tool 11 and pressure intensifier of Figure 2 in a vacuum bag similar to that illustrated at 24 in Figure 1, and evacuating the interior.

After curing, the structure 14 is separated from the base portion 12 of the mould tool 11 which usually causes at least some of the pin portions 13 to break from the base portion 12 so that they are retained in the cured structure 14 as shown on the right side of Figure 3.

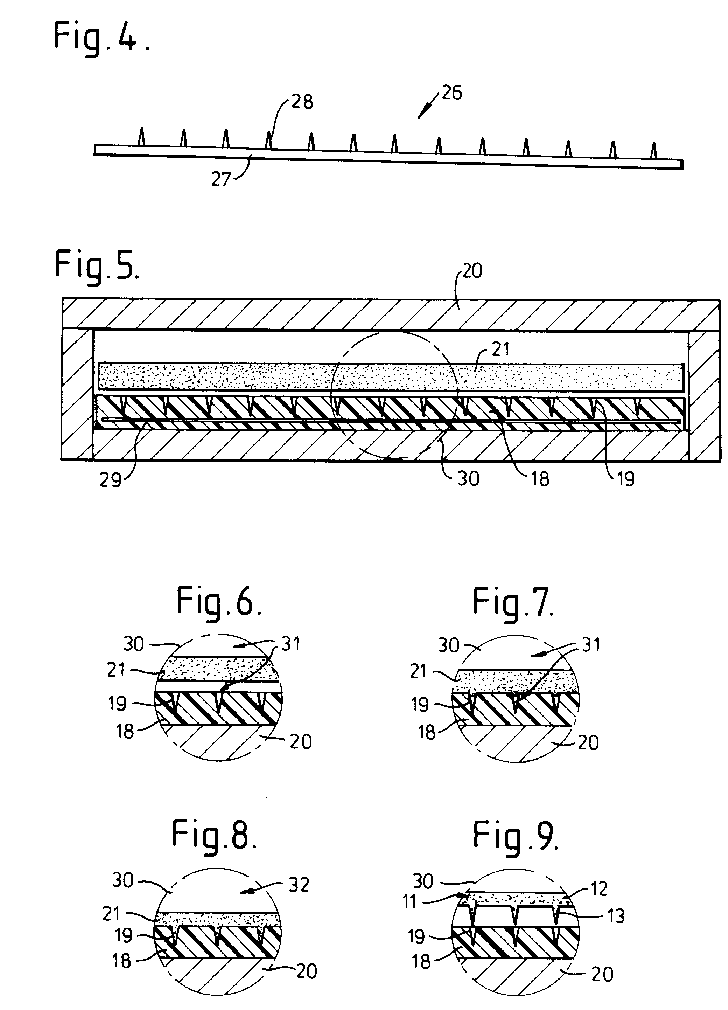

The retained pin portions 13 are then degraded by washing with water to dissolve the eutectic salt compound as indicated at 16 on the left side in Figure 4 to leave composite structure 14 with a plurality of perforations 17.

Visual inspection of sample laminate structures produced according to the method of this invention showed that the perforations 17 were well formed and uniform with a good edge seal due to resin flowing around the circumference of the pin portions 13 during forming. Lower surfaces of the samples were generally smooth and upper surfaces had slightly raised areas around each perforation 17. Moreover, a 'C' scan ultrasonic examination of the samples showed good structure quality with no de-laminations.

Figures 4 to 9 inclusive illustrate steps in the manufacture of the mould tool 11 used in the manufacture of the perforated composite laminate structure as hereinfore described.

First, a metal pattern 26 is produced having a base 27 and a plurality of upstanding pins 28 of a size and spacing required on the final mould tool 11. A moulding 18 (Figure 5) of silicon rubber is produced from the metal pattern 26 so as to have a plurality of indentations 19 in one surface corresponding to the metal pins 28 of the pattern 26. Preferably at least one layer of fibreglass 29 is located centrally throughout the silicon rubber moulding 18 to improve its thermal stability.

Moulding 18 is placed in a light alloy box 20 with indentations 19 uppermost and is superimposed by a quantity of System V water soluble eutectic salt compound 21. Figures 6 to 9 inclusive are views of the area within the circle identified by numeral 30 in Figure 5 and show various steps in the method for forming the mould tool 11.

The assembly is placed in a vacuum bag or vacuum chamber and a vacuum applied as illustrated at 31 in Figure 6 with the compound 21 in its solid state, and is then heated in an oven to a temperature of about 175°C sufficient to melt the compound 21 (Figure 7). It will be understood that the melt temperature will be adjusted as necessary to suit the particular eutectic salt compound being used.

The vacuum is released to allow the liquid compound 21 to flow into the indentations 19 as shown in Figure 8 under the influence of atmospheric pressure 32, and the assembly is then cooled to room temperature to solidify the compound 21 thereby forming the mould tool 11 (Figure 9). The parts are separated to leave the mould tool 11 with base portion 12 and projecting pin portions 13 as used in the aforementioned method for producing a perforated composite laminate 14.

When using a silicon rubber moulding 18 incorporating the aforementioned fibreglass layer 29 to improve the thermal stability, separation or demoulding can be accomplished at room temperature without damaging the pin portions 13. However, where the fibreglass layer 29 is not used separation of the mould tool 11 from the silicon moulding 18 preferably takes place at an elevated temperature of about 100°C at which the compound 21 has solidified in order to prevent possible breakage of the pin portions 13 as the silicon moulding 18 contracts fully on cooling to room temperature.

The method of the invention can be used for the production of contoured as well as flat perforated structures which is important certainly in respect of use of the perforated composite structures in the manufacture of acoustic attenuating liners.

Thus the present invention overcomes the aforementioned problem of separating the structure 14 from the mould tool 11, and facilitates the production of both flat and contoured perforated structures in a one-stage process.

Many modifications may be made without departing from the scope of the invention as defined by the appended claims. For example, any suitable degradable material other than the described water soluble compound may be used for the production of the mould tool 11; such alternatives may include heat degradable high temperature wax compounds and low grade thermoplastic compounds. Apart from thermo-set resin impregnated fibre-reinforced sheets the invention can be used with thermo-plastic resin impregnated sheets in which case the individual sheets are conveniently heat-softened prior to their assembly on mould tool 11, and heat-softening may also facilitate assembly of the thermo-set sheets. Curing of thermoplastic structures is accomplished under pressure by cooling the assembly to room temperature. Any suitable known means of applying a vacuum and consolidation pressure other than the described vacuum bagging process can be used.

## Claims

1. A method for making a perforated structure from composite material comprising the steps of:
   providing a mould tool made from degradable material and comprising a base portion and a plurality of integral spaced-apart pin portions projecting substantially perpendicular therefrom,
   locating a desired thickness of composite material on the mould tool so that the pin portions project through the material,
   curing the composite material to form the structure,
   separating the structure from the mould tool whereby at least some of the pin portions may break from the base portion to be retained in the structure and
   degrading the degradable material to remove the retained pin portions from the structure thereby forming the perforations through the structure.

2. A method according to Claim 1 and including the further step of applying a release agent to the surface of the mould tool prior to locating the composite material on the mould tool.

3. A method according to Claim 1 or Claim 2 and including the further step of applying pressure to the composite material to force the pin portions to project through the material.

4. A method according to Claim 3 wherein said pressure is applied using a vacuum bag process.

5. A method according to any preceding Claim and including the further step of applying pressure to the composite material to consolidate the-material during curing thereof.

6. A method according to Claim 5, wherein said consolidating pressure is applied using a silicon rubber pressure intensifier.

7. A method according to any preceding claim, wherein said composite material comprise sheets of fibre-reinforced material impregnated with a thermo-setting resin and curing of the structure is accomplished by the application of heat and pressure to the assembled sheets.

8. A method according to any one of Claims 1 to 6 inclusive wherein said composite material comprise sheets of fibre-reinforced material impregnated with a thermo-plastic resin and individual sheets are heated to soften the resin prior to location on the mould tool to facilitate projection of the pin portions therethrough.

9. A method according to Claim 8 wherein curing is accomplished by the application of pressure as the structure cools.

10. A method according to any preceding claim wherein the pin portions are circular in cross section with a plain shank length extending from the base portion and a pointed outer end.

11. A method according to any preceding claim wherein said degradable material comprises a water soluble eutectic salt compound and the step of degrading the material is accomplished by washing out retained pin portions with water.

12. A method according to Claim 1, wherein said mould tool is provided by
    producing a metal pattern having pins corresponding to the desired shape and size of the pins of the finished mould tool,
producing a moulding from the pattern so as to have a plurality of indentations in one surface corresponding to the pins of the metal pattern,
locating the moulding in a container with its indented surface uppermost,
disposing a quantity of a eutectic salt compound on the indented surface,
closing the container and applying a vacuum,
heating the container to a temperature sufficient to melt the eutectic salt compound whilst maintaining said vacuum,
releasing the vacuum in the container so that atmospheric pressure causes the melted compound to enter the indentations in the moulding,
cooling the assembly to a temperature sufficient to solidify the eutectic salt compound, and
separating the eutectic salt compound mould tool from the moulding.

13. A method according to Claim 12, wherein separation occurs at an elevated temperature below the temperature at which the eutectic salt compound solidifies and before full contraction of the moulding occurs so as to prevent said contraction causing breakage of any of the pins.

14. A method according to Claim 12, wherein said moulding is a rubber moulding incorporating at least one layer of fibreglass material to increase its thermal stability so as to permit separation of the mould tool from the rubber moulding at room temperature.

EP 0 471 459 A1

Fig.1.

Fig.2.

Fig.3.

Fig.10.

Fig.4.

Fig.5.

Fig.6.

Fig.7.

Fig.8.

Fig.9.

**European Patent Office**

## EUROPEAN SEARCH REPORT

Application Number

| | DOCUMENTS CONSIDERED TO BE RELEVANT | EP 91306736.9 | |
|---|---|---|---|

| Category | Citation of document with indication, where appropriate, of relevant passages | Relevant to claim | CLASSIFICATION OF THE APPLICATION (Int. Cl.5) |
|---|---|---|---|
| D,Y | US - A - 4 486 372 (MILLARD) * Totality * | 1 | B 29 C 33/52 B 29 C 37/00// //B 29 K 105:06 |
| X | | 2-5,7, 9 | |
| A | | 6,10 | |
| Y | GB - A - 1 234 465 (WAVIN) * Totality * | 1 | |
| X | | 7,8 | |
| A | | 10,11 | |
| X | GB - A - 632 972 (DUNLOP) * Totality * | 11 | |
| A | DE - A1 - 2 623 303 (PHOENIX) * Totality * | | |
| A | WO - A1 - 84/03 857 (PARK) * Totality * | | TECHNICAL FIELDS SEARCHED (Int. Cl.5) B 29 C |

The present search report has been drawn up for all claims

| Place of search | Date of completion of the search | Examiner |
|---|---|---|
| VIENNA | 15-11-1991 | MAYER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)